# EUROPEAN PATENT SPECIFICATION

(11) **EP 3 981 692 B1**
(45) Date of publication and mention of the grant of the patent: **29.05.2024**
(21) Application number: 21201173.8
(22) Date of filing: 06.10.2021
(51) Int. Cl.: B64G 1/40, F02K 9/50, F02K 9/60

(54) **PRESSURIZATION DEVICE FOR ROCKET PROPELLED BY LIQUID OXYGEN AND METHANE AND ROCKET PROPELLED BY LIQUID OXYGEN AND METHANE**
DRUCKBEAUFSCHLAGUNGSVORRICHTUNG FÜR EINE MIT FLÜSSIGEM SAUERSTOFF UND METHAN ANGETRIEBENE RAKETE SOWIE MIT FLÜSSIGEM SAUERSTOFF UND METHAN ANGETRIEBENE RAKETE
DISPOSITIF DE PRESSURISATION DE FUSÉE PROPULSÉE PAR OXYGÈNE LIQUIDE ET MÉTHANE ET FUSÉE PROPULSÉE PAR OXYGÈNE LIQUIDE ET MÉTHANE

(30) Priority: 09.10.2020 CN 202011068782
(43) Date of publication of application: 13.04.2022
(73) Proprietor: Beijing Interstellar Glory Space Technology Co., Ltd., Beijing 100032 (CN); Beijing Interstellar Glory Technology LLC, Beijing 100176 (CN); Beijing Space Manufacturing Technology Co., Ltd., Beijing 100176 (CN)
(72) Inventor: PENG, Xiaobo, Beijing, 100032 (CN); ZHANG, Xi, Beijing, 100032 (CN); XIONG, Yanbin, Beijing, 100032 (CN)
(74) Representative: Müller-Boré & Partner Patentanwälte PartG mbB

(56) References cited:
- CN-A- 109 339 981
- CN-A- 110 671 232
- CN-B- 109 595 468
- JP-A- 2000 248 994
- US-A1- 2020 011 275

## Description

### Technical Field

The present invention relates to the field of liquid rocket technology, and in particular, to a pressurization device for a rocket propelled by liquid oxygen and methane and a rocket propelled by liquid oxygen and methane.

### Background

A liquid oxygen/methane propellant has the characteristics of a wide range of sources, a low cost, non-toxicity, environmental friendliness and high performance, is more suitable for use in reusable and low-cost rocket launchers, and thus is one of ideal liquid power options for space launch vehicles in the future. Currently, a number of aerospace companies in China and other countries are developing rockets propelled by liquid oxygen and methane and rocket engines. A pressurization system is used to provide an ullage pressure of a liquid rocket propellant tank, wherein a pressurized gas enters the propellant tank, expands and occupies the space of a discharged propellant, and generates a working pressure on the liquid propellant, thereby meeting a propellant working pressure condition at an inlet of an engine required for the engine during flight on the one hand, and meeting an internal pressure requirement to maintain sufficient strength and stiffness of the rocket propellant tank on the other hand.

A tank gas-storage-type pressurization system of a liquid rocket means that a pressurized medium pre-stored in a gas storage device on the rocket enters a tank at a certain flow rate to achieve pressurization. At present, gas-storage-type pressurization systems commonly used in China and other countries mainly include normal-temperature high-pressure gaseous pressurization systems and low-temperature high-pressure gaseous pressurization systems. Normal-temperature high-pressure gaseous pressurization means that the pressurized medium is stored in a high-pressure gas cylinder at normal temperature, and the gas in the cylinder is conveyed to the tank for pressurization when pressurization is needed, and the pressurized gas can be warmed up before entering the tank to improve the pressurization efficiency. Low-temperature high-pressure gaseous pressurization means that a high-pressure gas cylinder is stored in a cryogenic propellant to achieve a high gas storage density, which allows reduction in the number or volume of pressurized gas cylinders and increases the payload of the rocket. Due to the strong oxidizing property of liquid oxygen, when the gas cylinder is placed in the liquid oxygen tank, both non-metallic materials in the composite cylinder and an aluminum alloy lining may undergo combustion reaction with liquid oxygen, leading to a great safety problem. Ordinary titanium alloy materials can be used as pressure vessel materials in liquid hydrogen, liquid nitrogen and even liquid helium environments due to their advantages of high specific strength and good corrosion resistance, as well as an excellent cryogenic property, and have been used in the cylinder pressurization system of the Long March rocket family in a stable and reliable way, but there is a risk of explosion when an ordinary titanium alloy is in contact with liquid oxygen; flame-retardant titanium alloy materials need more safety tests before being duly applied in liquid oxygen environments, and their material cost is ten times or more greater than that of ordinary titanium alloys; other materials with better compatibility with liquid oxygen, such as high-temperature alloys, have the disadvantage of a large specific gravity. Therefore, how to assemble and configure a pressurized gas cylinder and a pressurization device to reduce the cost while ensuring safety of the system is a technical problem to be solved in the art.
CN 109 595 468 B describes a cold helium pressurization and cooling delivery system for cryogenic launch vehicles. CN 110 671 232 A describes a liquid oxygen temperature zone cold helium pressurization system.

### Summary of Invention

Therefore, a technical problem to be solved by the present invention is to overcome the shortcomings of a high cost of a pressurization device and safety hazards in the existing cryogenic high-pressure gaseous pressurization technology applied to a rocket propelled by liquid oxygen and methane, and thus the present invention provides a pressurization device for a rocket propelled by liquid oxygen and methane and a rocket propelled by liquid oxygen and methane with a low cost while ensuring safety.

To solve the above-mentioned technical problem, the present invention provides a pressurization device for a rocket propelled by liquid oxygen and methane, the device comprising:
a liquid oxygen tank provided with a pressurized gas inlet; and
a liquid methane tank provided with a pressurized gas cylinder therein, the pressurized gas cylinder being communicated with the pressurized gas inlet through a pipeline.

Optionally, the liquid methane tank is further provided with a heat exchange structure therein, an outlet of the pressurized gas cylinder is communicated with an inlet of the heat exchange structure, and an outlet of the heat exchange structure is communicated with the pipeline.

Optionally, the heat exchange structure comprises a heat exchange coil, and a bracket arranged on an upper part of an inner wall of the liquid methane tank, the heat exchange coil being mounted on the bracket.

Optionally, the pipeline is exposed outside of the liquid methane tank and the liquid oxygen tank.

Optionally, the pipeline between the outlet of the heat exchange structure and the pressurized gas inlet is provided with a gas flow regulation structure.

Optionally, the gas flow regulation structure comprises a valve and a restriction orifice which are arranged in series.

Optionally, a plurality of series-arranged valves and restriction orifices are provided in parallel.

Optionally, the pressurization device further comprises a controller and a pressure detector which are arranged in parallel with the gas flow regulation structure, the controller being arranged to receive a signal sent by the pressure detector and control the opening and closing of the gas flow regulation structure.

Optionally, the pressurization device further comprises an energy dissipator provided at the pressurized gas inlet.

A rocket propelled by liquid oxygen and methane is also provided, which comprises the pressurization device for a rocket propelled by liquid oxygen and methane in the present invention.

The technical solutions of the present invention have the following advantages:
1. In the pressurization device for a rocket propelled by liquid oxygen and methane provided in the present invention, with the pressurized gas cylinder arranged in the liquid methane tank, since methane is weakly corrosive, the gas cylinder, whether made of an titanium alloy or aluminum alloy, can be safely placed in the liquid methane tank, and is free from corrosion or combustion and explosion, thus reducing the safety hazards, and achieving a low cost as there is no need to develop gas cylinders of new materials. In addition, storing the pressurized gas cylinder in the cryogenic liquid methane tank can achieve a high gas storage density, and allows reduction in the number or volume of pressurized gas cylinders and increases the payload of the rocket.
2. In the pressurization device for a rocket propelled by liquid oxygen and methane provided in the present invention, with the heat exchange structure arranged in the liquid methane tank, when the system needs to be pressurized, the cryogenic gas in the pressurized gas cylinder is conveyed to the liquid oxygen tank through the pipeline and the pressurized gas inlet after heat exchange with the heat exchange structure in the liquid methane tank, which improves the heat exchange capacity, avoids coupling with an engine, and reduces the interference with the engine, and this reduces the weight of the whole device, and improves the carrying capacity.
3. In the pressurization device for a rocket propelled by liquid oxygen and methane provided in the present invention, the arrangement of the heat exchange coil increases the heat exchange area between the cryogenic gas in the pressurized gas cylinder and the gas in the ullage in the liquid methane tank, and ensures the heat exchange effect.
4. In the pressurization device for a rocket propelled by liquid oxygen and methane provided in the present invention, as the pipeline is exposed outside of the liquid methane tank and the liquid oxygen tank, the pressurized gas in the pipeline can fully absorb the heat in the external environment due to an aerodynamic heating effect during flight of the rocket, thus further improving the enthalpy value of the pressurized gas, and improving the pressurization efficiency.
5. In the pressurization device for a rocket propelled by liquid oxygen and methane provided in the present invention, with the gas flow regulation structure between the filter and the pressurized gas inlet, the controller and the pressure detector, the controller can adjust the gas flow into the liquid oxygen tank according to the pressure in the liquid oxygen tank, thus further ensuring safety while ensuring that sufficient pressure can be provided.
6. In the pressurization device for a rocket propelled by liquid oxygen and methane provided in the present invention, the energy dissipator at the pressurized gas inlet reduces the flow rate of the pressurized gas into the liquid oxygen tank, while the flow direction of the pressurized gas can be adjusted, thus further improving safety.

### Brief Description of the Drawings

In order to describe the technical solutions in the embodiments of the present invention or in the prior art more clearly, a simple introduction on the accompanying drawings used in the description of the embodiments or the prior art is given below. Apparently, the accompanying drawings in the description below are merely some of the embodiments of the present invention, based on which other drawings may be obtained by those of ordinary skill in the art without creative work.
Figure 1 is a schematic diagram of a pressurization device for a rocket propelled by liquid oxygen and methane provided by the present invention.
Figure 2 is a principle diagram of the pressurization device for a rocket propelled by liquid oxygen and methane provided by the present invention.

### Reference numerals:

1 - liquid oxygen tank; 2 - liquid methane tank; 3 - pressurized gas cylinder; 4 - pipeline; 5 - heat exchanger coil; 6 - filter; 7 - controller; 8 - pressure detector; 9 - valve; 10 - restriction orifice; 11 - energy dissipator; 12 - safety valve.

### Detailed Description of the Embodiments

Technical solutions of the present invention will be described below clearly and completely in conjunction with the accompanying drawings. Obviously, the described embodiments are part of, instead of all of embodiments of the present invention. All other embodiments obtained by those of ordinary skill in the art without creative work, based on the embodiments in the present invention, fall into the protection scope of the present invention.

In addition, technical features involved in different embodiments of the present invention described below may be combined with each other so long as they do not conflict with each other.

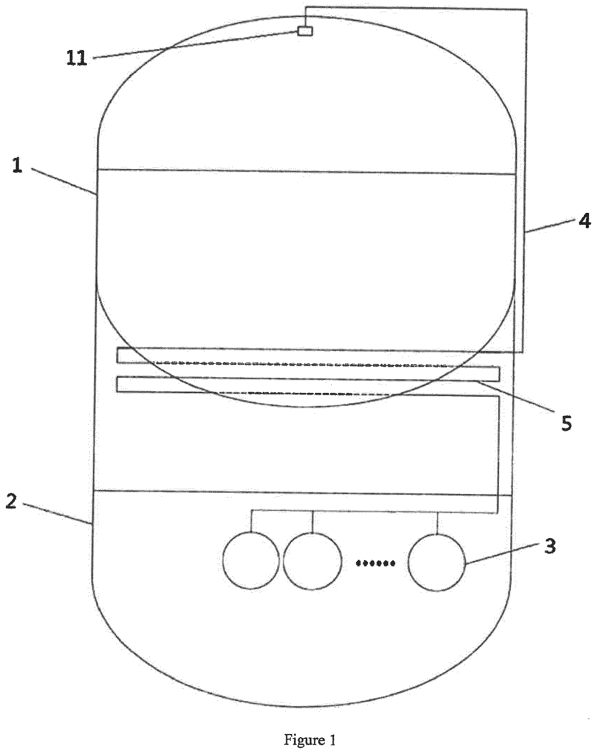

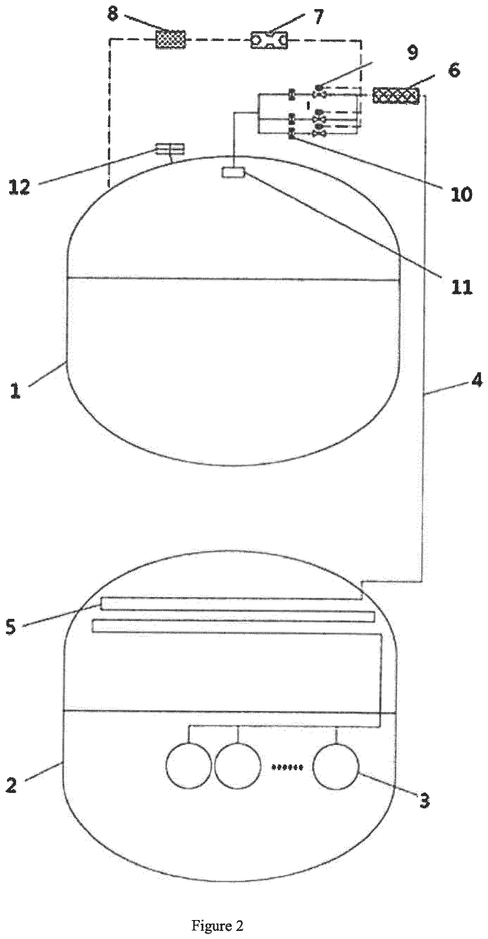

In a specific implementation of a pressurization device for a rocket propelled by liquid oxygen and methane as shown in Figures 1 and 2, a pressurized gas is cold helium, and the device comprises a liquid oxygen tank 1 and a liquid methane tank 2 with liquid oxygen and liquid methane stored therein, respectively. The liquid oxygen tank 1 and the liquid methane tank 2 are both ellipsoidal, and liquid oxygen tank 1 is provided on top of the liquid methane tank 2, and they share a bottom wall to form a sealed space. The top of the liquid oxygen tank 1 is provided with a pressurized gas inlet; and the liquid methane tank 2 is autogenously pressurized, and provided with a plurality of pressurized gas cylinders 3 arranged in parallel on an inner side wall, the pressurized gas cylinders 3 being spherical and made of a titanium alloy, and storing cryogenic cold helium with an initial pressure of 23 MPa and an initial temperature of 112 K therein. The pressurized gas cylinders 3 are communicated with the pressurized gas inlet through a pipeline 4. The pipeline 4 extends through an opening at the top of the liquid methane tank 2 and along a side wall of the liquid oxygen tank 1 to the top pressurized gas inlet to expose most of the pipeline to the outside of the liquid methane tank 2 and the liquid oxygen tank 1.

To improve the heat exchange capacity, a heat exchange structure is also provided in the liquid methane tank 2. The heat exchange structure comprises a heat exchange coil 5, and a bracket arranged on an upper part of an inner wall of the liquid methane tank 2. The heat exchange coil 5 is made of a titanium alloy, spirally rises to form a multi-layer ring tube, and is installed on the bracket. Outlets of the pressurized gas cylinders 3 are communicated with an inlet of the heat exchange coil 5, and an outlet of the heat exchange coil 5 is communicated with the pipeline 4.

To facilitate control of the flow of the pressurized gas entering the liquid oxygen tank 1, the pipeline 4 between the outlet of the heat exchange structure and the pressurized gas inlet is provided with a gas flow regulation structure, and a controller 7 and a pressure detector 8 which are arranged in parallel with the gas flow regulation structure. A filter 6 is provided at a position on the pipeline 4 close to an inlet of the gas flow regulation structure to filter the pressurized gas. The gas flow regulation structure comprises a valve 9 and a restriction orifice 10 which are arranged in series. A plurality of series-arranged valves 9 and restriction orifices 10 are provided in parallel, and the valves 9 are solenoid valves. The pressure detector 8 detects the pressure in the liquid oxygen tank 1 in real time and sends a signal of measured pressure data to the controller 7, and the controller 7 receives the signal sent by the pressure detector 8 and controls the opening and closing of one or more valves 9, thereby regulating the gas flow into the liquid oxygen tank 1.

When the pressure in the liquid oxygen tank 1 is less than a set pressure value, the controller 7 opens the valves 9 so that the pressurized gas enters the liquid oxygen tank 1 through the pipeline 4, and maintains the state; and when the pressure in the liquid oxygen tank 1 is greater than a set pressure value, the controller 7 closes the valves 9, and maintains the state. The set pressure values include a valve opening pressure set value and a valve closing pressure set value. The set values may be constants, or functions that change over time, and are set as needed.

To reduce the flow rate and adjust the flow direction of the pressurized gas entering the liquid oxygen tank 1, an energy dissipator 11 is also provided at the pressurized gas inlet. Specifically, the energy dissipator 11 is of a multi-layer plate perforated structure.

A safety valve 12 is also provided on the top of the liquid oxygen tank 1. If the pressure in the liquid oxygen tank 1 is greater than or equal to a preset safety pressure, the safety valve 12 is opened; otherwise, the safety valve 12 remains closed.

The pressurized gas cylinders 3 are installed at a position below an initial liquid methane level, and as the liquid methane is consumed during flight, the liquid level drops and the pressurized gas cylinders 3 are gradually exposed from the liquid level. In this way, when the pressurized gas cylinder 3 is below the liquid level, it can ensure that even if the valves 9 are closed, the pressure in the pipeline 4 is the same as the pressure in the pressurized gas cylinders 3, but never exceeds an initial pressure in the pressurized gas cylinders 3. When the pressurized gas cylinders 3 are exposed from the liquid level, the pressure in the pressurized gas cylinders 3 becomes lower than the initial pressure of the pressurized gas cylinders 3 with the consumption of helium, so even if the valves 9 are closed and the pressure in pipeline 4 increases, the pressure in the pressurized gas cylinders 3 and the pipeline 4 does not exceed the initial pressure of the pressurized gas cylinders 3, thus ensuring safety. Moreover, pressurized gas cylinder bodies are directly heated by high temperature gas in a methane ullage, which can increase the temperature of the helium inside the cylinders, and reduce the density of the remaining unusable helium inside the cylinders at the same end pressure of the gas cylinders, thus increasing the utilization efficiency.

When the pressure detector 8 detects that the pressure in the liquid oxygen tank 1 is less than a set pressure value and the system needs to be pressurized, the controller 7 controls the valves 9 to be opened, and the cold helium in the pressurized gas cylinders 3, after heat exchange with the heat exchange coil 5 in the liquid methane tank 2, enters the pipeline 4, is filtered by the filter 6, and then conveyed along the pipeline 4 into the liquid oxygen tank 1, and fully absorbs heat of the external environment in the conveying process. When the pressure detector 8 detects that the pressure in the liquid oxygen tank 1 is greater than a set pressure value, the controller 7 controls the valves 9 to be closed, and the pressurization is sopped.

A rocket propelled by liquid oxygen and methane is also provided, which comprises the pressurization device for a rocket propelled by liquid oxygen and methane.

As an alternative implementation, the liquid oxygen tank 1 and the liquid methane tank 2 may also be arranged independently, and in this case, the heat transfer coil 5 is fixed inside a top wall of the liquid methane tank 2 by means of a bracket.

As an alternative implementation, the pipeline 4 may also be arranged within a fairing provided with a vent.

Obviously, the embodiments described above are merely examples for clear description, and are not intended to limit the implementations. Other variations or modifications of the various forms may also be made by those skilled in the art based on the above description. There is no need and no way to describe all implementations in an exhaustive manner here. Obvious variations or modifications derived therefrom are still within the protection scope of the invention-creation as long as they fall under the subject matter defined in the appended claims.

## Claims

1. A pressurization device for a rocket propelled by liquid oxygen and methane, comprising:
a liquid oxygen tank (1) provided with a pressurized gas inlet; and
a liquid methane tank (2) provided with a pressurized gas cylinder (3) therein, the pressurized gas cylinder (3) being communicated with the pressurized gas inlet through a pipeline (4).

2. The pressurization device for a rocket propelled by liquid oxygen and methane according to claim 1, **characterized in that** the liquid methane tank (2) is further provided with a heat exchange structure therein, an outlet of the pressurized gas cylinder (3) is communicated with an inlet of the heat exchange structure, and an outlet of the heat exchange structure is communicated with the pipeline (4).

3. The pressurization device for a rocket propelled by liquid oxygen and methane according to claim 2, **characterized in that** the heat exchange structure comprises
a heat exchange coil (5), and
a bracket arranged on an upper part of an inner wall of the liquid methane tank (2), the heat exchange coil (5) being mounted on the bracket.

4. The pressurization device for a rocket propelled by liquid oxygen and methane according to any one of claims 1-3, **characterized in that** the pipeline (4) is exposed outside of the liquid methane tank (2) and the liquid oxygen tank (1).

5. The pressurization device for a rocket propelled by liquid oxygen and methane according to any one of claims 2 to 4, **characterized in that** the pipeline (4) between the outlet of the heat exchange structure and the pressurized gas inlet is provided with a gas flow regulation structure.

6. The pressurization device for a rocket propelled by liquid oxygen and methane according to claim 5, **characterized in that** the gas flow regulation structure comprises a valve (9) and a restriction orifice (10) which are arranged in series.

7. The pressurization device for a rocket propelled by liquid oxygen and methane according to any one of claims 1 to 6, **characterized in that** a plurality of series-arranged valves (9) and restriction orifices (10) are provided in parallel.

8. The pressurization device for a rocket propelled by liquid oxygen and methane according to any one of claims 5-7, **characterized in that** the pressurization device further comprises a controller (7) and a pressure detector (8) which are arranged in parallel with the gas flow regulation structure, the controller (7) being arranged to receive a signal sent by the pressure detector (8) and control the opening and closing of the gas flow regulation structure.

9. The pressurization device for a rocket propelled by liquid oxygen and methane according to any one of claims 1-8, **characterized in that** the pressurization device further comprises an energy dissipator (11) provided at the pressurized gas inlet.

10. A rocket propelled by liquid oxygen and methane, comprising the pressurization device for a rocket propelled by liquid oxygen and methane according to any one of claims 1-9.

## Patentansprüche

1. Eine Druckbeaufschlagungs-Vorrichtung für eine mit flüssigem Sauerstoff und Methan angetriebene Rakete, umfassend:
einen Flüssigsauerstoff-Tank (1), der mit einem Druckgas-Einlass versehen ist; und
einen Flüssigmethan-Tank (2), der im Inneren mit einer Druckgas-Flasche bzw. mit einem Druckgaszylinder (3) versehen ist, wobei der Druckgaszylinder (3) über eine Rohrleitung (4) mit dem Druckgas-Einlass verbunden ist.

2. Die Druckbeaufschlagungs-Vorrichtung für eine mit Flüssigsauerstoff und Methan angetriebene Rakete nach Anspruch 1, **dadurch gekennzeichnet, dass** der Flüssigmethan-Tank (2) im Inneren ferner mit einer Wärmeaustauschstruktur versehen ist, wobei ein Auslass des Druckgaszylinders (3) mit einem Einlass der Wärmeaustauschstruktur verbunden ist, und ein Auslass der Wärmeaustauschstruktur mit der Rohrleitung (4) verbunden ist.

3. Die Druckbeaufschlagungs-Vorrichtung für eine mit flüssigem Sauerstoff und Methan angetriebene Rakete nach Anspruch 2, **dadurch gekennzeichnet, dass** die Wärmetauschstruktur Folgendes umfasst:
eine Wärmetauschspule (5) und
eine Halterung, die an einem oberen Teil einer Innenwand des Flüssigmethan-Tanks (2) angeordnet ist, wobei die Wärmetauschspule (5) an der Halterung angebracht ist.

4. Die Druckbeaufschlagungs-Vorrichtung für eine mit flüssigem Sauerstoff und Methan angetriebene Rakete nach irgendeinem der Ansprüche von 1 bis 3, **dadurch gekennzeichnet, dass** die Rohrleitung (4) außerhalb des Flüssigmethan-Tanks (2) und des Flüssigsauerstoff-Tanks (1) freiliegt.

5. Die Druckbeaufschlagungs-Vorrichtung für eine mit flüssigem Sauerstoff und Methan angetriebene Rakete nach irgendeinem der Ansprüche von 2 bis 4, **dadurch gekennzeichnet, dass** die Rohrleitung (4) zwischen dem Auslass der Wärmetauscher-Struktur und dem Druckgas-Einlass mit einer Gasflussregelungs-Struktur versehen ist.

6. Die Druckbeaufschlagungs-Vorrichtung für eine mit flüssigem Sauerstoff und Methan angetriebene Rakete nach Anspruch 5, **dadurch gekennzeichnet, dass** die Gasflussregelungs-Struktur ein Ventil (9) und eine Drosselöffnung (10) umfasst, die in Reihe angeordnet sind.

7. Die Druckbeaufschlagungs-Vorrichtung für eine mit flüssigem Sauerstoff und Methan angetriebene Rakete nach irgendeinem der Ansprüche von 1 bis 6, **dadurch gekennzeichnet, dass** eine Vielzahl von in Reihe angeordneten Ventilen (9) und Drosselöffnungen (10) parallel zueinander vorgesehen sind.

8. Die Druckbeaufschlagungs-Vorrichtung für eine mit flüssigem Sauerstoff und Methan angetriebene Rakete nach irgendeinem der Ansprüche von 5 bis 7, **dadurch gekennzeichnet, dass** die Druckbeaufschlagungs-Vorrichtung ferner eine Steuerung (7) und einen Druckdetektor (8) umfasst, die parallel zur Gasflussregulierungs-Struktur angeordnet sind, wobei die Steuerung (7) so angeordnet ist, dass sie ein vom Druckdetektor (8) gesendetes Signal empfängt und das Öffnen und Schließen der Gasflussregulierungs-Struktur steuert.

9. Die Druckbeaufschlagungs-Vorrichtung für eine mit flüssigem Sauerstoff und Methan angetriebene Rakete nach irgendeinem der Ansprüche von 1 bis 8, **dadurch gekennzeichnet, dass** die Druckbeaufschlagungs-Vorrichtung ferner einen Energie-Dissipator (11) umfasst, der am Druckgas-Einlass vorgesehen ist.

10. Eine Rakete, die mit flüssigem Sauerstoff und Methan angetrieben wird, umfassend die Druckbeaufschlagungs-Vorrichtung für eine mit flüssigem Sauerstoff und Methan angetriebene Rakete nach irgendeinem der Ansprüche von 1 bis 9.

## Revendications

1. Un dispositif de pressurisation pour fusée propulsée à l'oxygène et au méthane liquides, comprenant :
un réservoir d'oxygène liquide (1) équipé d'une entrée de gaz sous pression ; et
un réservoir de méthane liquide (2) équipé à l'intérieur d'une bouteille ou encore d'un cylindre de gaz sous pression (3), le cylindre de gaz sous pression (3) étant relié à l'entrée de gaz sous pression par une conduite (4).

2. Le dispositif de pressurisation pour fusée propulsée à l'oxygène et au méthane liquides d'après la revendication 1, **caractérisé en ce que** le réservoir de méthane liquide (2) est en outre équipé à l'intérieur d'une structure d'échange thermique, une sortie de la bouteille de gaz pressurisé (3) étant mise en communication avec une entrée de la structure d'échange thermique, et une sortie de la structure d'échange thermique étant mise en communication avec la conduite (4).

3. Le dispositif de pressurisation pour fusée propulsée à l'oxygène et au méthane liquides d'après la revendication 2, **caractérisé en ce que**
la structure d'échange thermique comprend :
une bobine d'échange thermique (5), et
un support disposé sur une partie supérieure d'une paroi intérieure du réservoir de méthane liquide (2), la bobine d'échange thermique (5) étant montée sur le support.

4. Le dispositif de pressurisation pour fusée propulsée à l'oxygène et au méthane liquides d'après l'une quelconque des revendications de 1 à 3, **caractérisé en ce que** la conduite (4) est exposée à l'extérieur du réservoir de méthane liquide (2) et du réservoir d'oxygène liquide (1).

5. Le dispositif de pressurisation pour fusée propulsée à l'oxygène et au méthane liquides d'après l'une quelconque des revendications de 2 à 4, **caractérisé en ce que** la conduite (4) entre la sortie de la structure d'échange thermique et l'entrée de gaz sous pression est équipée d'une structure de régulation de débit de gaz.

6. Le dispositif de pressurisation pour fusée propulsée à l'oxygène et au méthane liquides d'après la revendication 5, **caractérisé en ce que** la structure de régulation de débit de gaz comprend une vanne (9) et un orifice de restriction (10) qui sont disposés en série.

7. Le dispositif de pressurisation pour fusée propulsée à l'oxygène et au méthane liquides d'après l'une quelconque des revendications de 1 à 6, **caractérisé en ce qu'**une pluralité de vannes (9) et d'orifices de restriction (10) disposés en série sont fournis en parallèle.

8. Le dispositif de pressurisation pour fusée propulsée à l'oxygène et au méthane liquides d'après l'une quelconque des revendications de 5 à 7, **caractérisé en ce que** le dispositif de pressurisation comprend en outre un dispositif de commande (7) et un détecteur de pression (8) qui sont disposés en parallèle avec la structure de régulation de débit de gaz, le dispositif de commande (7) étant agencé pour recevoir un signal envoyé par le détecteur de pression (8) et pour commander l'ouverture et la fermeture de la structure de régulation de débit de gaz.

9. Le dispositif de pressurisation pour fusée propulsée à l'oxygène et au méthane liquides d'après l'une quelconque des revendications de 1 à 8, **caractérisé en ce que** le dispositif de pressurisation comprend en outre un dissipateur d'énergie (11) fourni au niveau de l'entrée de gaz sous pression.

10. Une fusée propulsée à l'oxygène et au méthane liquides, comprenant le dispositif de pressurisation pour fusée propulsée à l'oxygène et au méthane liquides d'après l'une quelconque des revendications de 1 à 9.
